# FASCICULE DE BREVET EUROPEEN

(11) **EP 0 292 062 B1**
(45) Date de publication et mention de la délivrance du brevet: **13.04.1994**
(21) Numéro de dépôt: 88200970.7
(22) Date de dépôt: 14.05.1988
(51) Int. Cl.: B30B 15/10

(54) **Groupe frein-embrayage pour presses mécaniques**
Bremse-Kupplungsgruppe für mechanisches Pressen
Brake-clutch group for mechanical presses

(30) Priorité: 19.05.1987 IT 8554787; 07.12.1987 IT 8564387
(43) Date de publication de la demande: 23.11.1988
(73) Titulaire: Meneghetti, Tiziano, I-36022 Cassola Vincenza (IT)
(72) Inventeur: Meneghetti, Tiziano, I-36022 Cassola Vincenza (IT)
(74) Mandataire: Bettello, Luigi, Dott. Ing.

(56) Documents cités:
- GB-A- 679 211
- US-A- 1 643 473
- US-A- 2 529 121
- US-A- 4 457 415

## Description

La présente invention a pour objet un groupe frein-embrayage, destiné à être monté sur les presses mécaniques.

Le groupe suivant l'invention est défini à la revendication 1 et on notera en fait que sa caractéristique essentielle est qu'il est réalisé par un bloc unique, de montage facile, et sur lequel le volant est emboîté directement.

Dans des presses similaires comme par exemple le brevet US-A-2.529.121, les mâchoires sont disposés en deux plans differentes, ce que provoque des sollicitations axiales qui rendent difficile le bon fonctionnement du dispositif.
Au contraire le bloc unique de la presente invention ne provoque aucune sollicitation actiale et le dispositif fonctione perfectement.

Les presses munies d'un tel groupe peuvent être de ce fait pourvues d'une commande unique, le groupe étant èquipé de mâchoires avec garnitures en ferodo, faciles à remplacer et à trouver sur le marché, car utilisées dans le secteur automobile.

Non seulement le groupe peut être monté sur des presses neuves, mais il peut être facilement appliqué à des presses existantes qui de cette manière peuvent être dotées d'une commande unique, avec mâchoires à garnitures en ferodo.

Une autre caractéristique de nouveauté de l'invention réside dans le fait que l'activation du groupe ne provoque pas de poussées axiales de sorte que des coussinets radiaux peu coûteux suffisent.

On sait que les presses mécaniques utilisées jusqu'à présent sont munies d'un dispositif de frein-embrayage dont l'embrayage permet de relier le volant tournant au dispositif de compression, généralement du type à excentrique et bielle de commande, dont le frein permet de stopper la rotation du volant, par exemple une fois terminées les opèrations à l'aide de la presse ou, à la limite, en correspondance avec chaque opération de presse.

Aussi bien l'embrayage que le frein comportent des surfaces d'usure qui se détériorent rapidement et exigent un difficile travail de remplacement impliquant un arêt prolongé de la machine e la nécessité de disposer de pièces de rechange qu'il n'est pas toujours facile de trouver dans le commerce.

L'objet de la présente invention est de réaliser un groupe frein-embrayage destiné à être substitué aux dispositifs normaux déjà existants sur les presses, en les adaptant avec facilité tant à l'arbre de commande qu'au volant de la machine, ce qui permet, dans le cas de défaillance mécanique ou d'usure, de simplement remplacer le groupe frein-embrayage par un nouveau groupe en bon état qui doit être tenu en stock dans ce but, ce qui limite au minimum le temps d'arrêt de la machine, donnant des avantages sensibles quant au coût de production, et diminuant aussi le danger et le bruit.

Le remplacement facile des mâchoires à garnitures ferodo usées, sur l'embrayage et sur le frein, peut se faire aisément sur le groupe démonté de la machine, le rendant disponible pour une nouvelle utilisation.

La caractéristique principale du groupe selon l'invention est d'être muni d'une seule commande hydropneumatique qui, simultanément, relâche le frein et engage l'embrayage, ce qui interdit, de la façon la plus absolue, la mise en marche accidentelle de l'arbre qui pourrait avoir des dangers graves pour l'opérateur.

Une autre caractéristique nouvelle de la présente invention réside dans le fait qu'il est possible de récupérer le jeu qui se crée par suite de l'usure du matériau anti-friction, en rétablissant le tarage des ressorts, dans le but de conserver toujours la même durée d'intervention, indépendamment de l'état d'usure du matériau anti-friction lui-même.

Selon une autre caractéristique nouvelle de l'invention, il est prévu de pouvoir régler le niveau de freinage en agissant sur le tarage des ressorts et en augmentant la pression pneumatique de poussée, qui peut être contrôlée par un manomètre appliqué sur le groupe de commande hydropneumatique, ce qui permet en conséquence de faire varier la vitesse de rotation de l'arbre, garantissant dans tous les cas un freinage en toute sécurité pour l'opérateur.

Suivant une autre caractéristique encore, il est prévu de diminuer la demande en air comprimé à chaque mise en route, par suite du volume limité nécessaire pour mettre sous pression l'huile qui actionne le vérin qui lui-même commande les mâchoires, ce qui autorise des installations pneumatiques de capacité limitée avec les diminutions de prix de revient qui en découlent.

Une caractéristique de nouveauté ultérieure de l'invention consiste dans le fait que l'activation du groupe ne provoque pas de poussées axiales, ce qui permet l'utilisation de coussinets radiaux peu coûteux.

Toujours selon l'invention, il est prévu une série d'ailettes de refroidissement qui, étant solidaires du volant, refroidissent le groupe d'une manière régulière et constante, évitant ainsi les échauffements dangereux du matériau anti-friction.

Naturellement, dans ce cas aussi il est prévu que le groupe puisse être facilement monté tant sur des presses de construction nouvelle que sur des presses existantes.

Le matériau anti-friction utilisé sur les mâchoires est facile à trouver sur le marché car il est utilisé dans le secteur automobile, ce qui permet de réduire au minimum le temps d'immobilisation de la machine.

Dans encore une autre caractéristique de l'invention, il est prévu que les deux mâchoires frein-embrayage soient reliées entre elles par des secteurs dentés, ce qui fait que leur commande simultanée est possible même dans le cas de rupture accidentelle d'un ou de plusieurs ressorts de rappel, avec garantie absolue de fonctionnement même dans de telles conditions. Les essais effectués ont permis de constater que le fonctionnement était particulièrement silencieux, ce qui est une caractéristique hautement appréciée des utilisateurs de la machine.

Dans ce qui suit le groupe va maintenant être décrit de façon plus détaillée avec l'aide des planches de dessins jointes, dans lesquelles :
Fig. 1 représente en coupe axiale le groupe complet monté sur l'arbre de commande de la machine.
Fig. 2 est une coupe axiale, selon la ligne I-I de la fig. 1, du dispositif de frein-embrayage avec ses ressorts de rappel.
Fig. 3 montre, à une échelle agrandie, le détail correspondant à un ressort de rappel.
Fig. 4 illustre la commande hydro-pneumatique pour l'actionnement du groupe frein-embrayage.

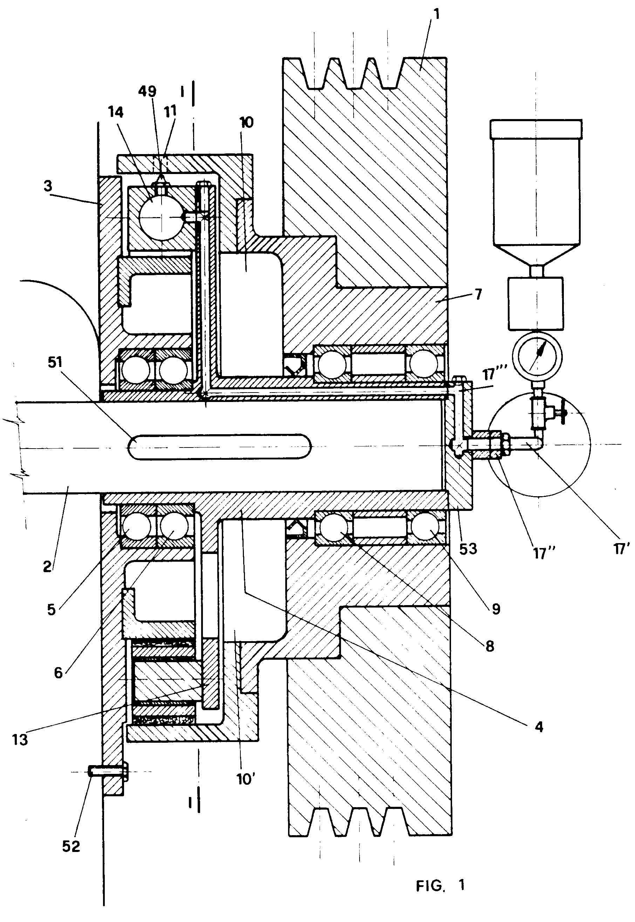

Ainsi qu'on le verra en particulier d'après la fig. 1, le groupe frein-embrayage faisant l'objet de l'invention est monté entre le volant 1 et l'arbre 2. Le volant représenté remplit aussi la fonction de poulie. Le groupe comprend le disque 3 faisant partie du groupe frein, par rapport auquel tourne le moyeu 4, emboîté sur l'arbre 2, avec interposition de deux roulements à billes 5 et 6. A son tour, le volant 1 est emboîté sur la douille 7, qui fait partie du groupe embrayage et tourne sur les roulements 8 et 9. Tous les roulements sont de type radial, n'ayant pas à supporter des efforts de poussée axiale.

Sur la douille 7 sont fixées les ailettes radiales 10 et 10' qui assurent un refroidissement des mâchoires par ventilation forcée.

Sur le tambour 25 est prévu l'orifice 11 qui permet l'échappement de l'air du vérin 14, en passant par la soupape 49, et facilite le tarage des ressorts au moyen d'une clé dynamométrique.

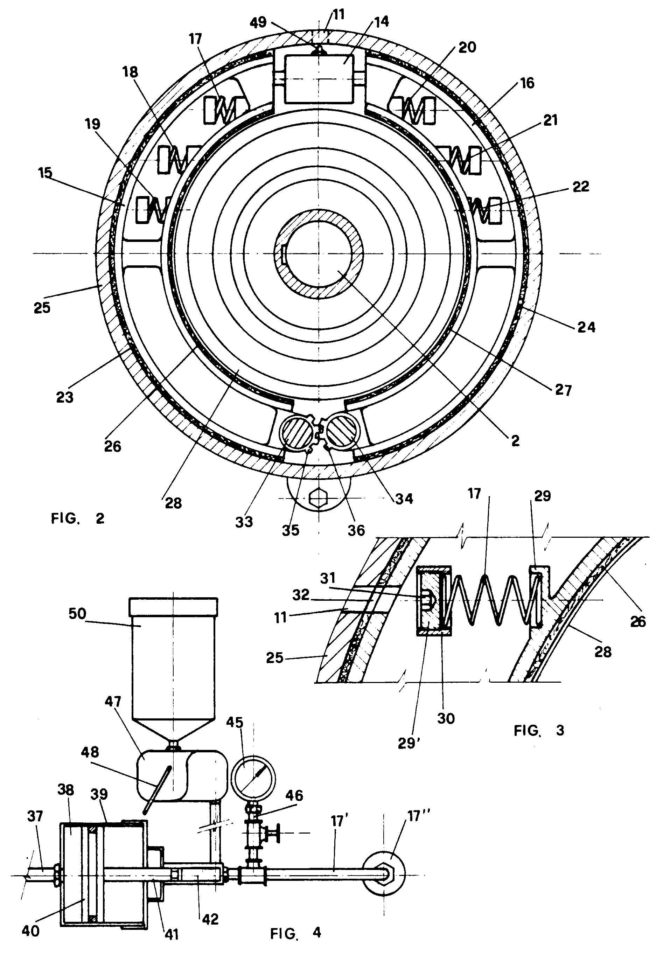

Sur le moyeu est prévu un disque 13, sur lequel est monté le vérin 14 qui commande deux mâchoires 15 et 16 (fig. 2).

Le vérin 14 est mû par de l'huile sous pression provenant de la commande hydro-pneumatique par l'intermédiaire de la canalisation 17', du joint tournant 17'' et de la conduite 17''' intérieure au moyeu 4.

Ainsi qu'on le voit mieux d'après la figure, les deux mâchoires frein-embrayage 15 et 16 sont actionnées à l'expansion par le vérin 14 et elle sont rappelées en position de freinage par les ressorts 17, 18 et 19 agissant sur la mâchoire 15 et les ressorts 20, 21, et 22 agissant sur la mâchoire 16.

A la suite de l'action du vérin 14, les mâchoires 15 et 16, sur lesquelles sont appliquées les bandes ou garnitures de matériau anti-friction 26 et 27 qui servent de frein, relâchent leur prise sur le tambour 28, solidaire de la machine, ce qui permet au volant 1 de metrre l'arbre 2 en rotation.
Au contraire, l'absence de pression dans le vérin 14 provoque la cessation l'application des bandes anti-friction 23, 24 contre le tambour 25 et l'application des bandes anti-friction 26 et 27 contre le tambour 28, ce qui produit le freinage de l'arbre 2.

Chacun des ressorts, comme le ressort 17 par exemple (fig. 3), porte d'un côté contre le logement 29 qui fait saillie à l'arrière de la mâchoire 15, et de l'autre contre le support fileté 29' solidaire du disque 13 (fig. 1) accouplé par filetage à la douille 30, par rapport à laquelle il est réglable au moyen par exemple d'une clé appropriée introduite dans la cavité 31 disposée à cette fin, en traversant l'orifice 32 pratiqué sur la partie extérieure de la mâchoire.

Le réglage des ressorts 17, fait au moyen d'une clé dynamométrique, permet de conserver toujours une poussée constante de la mâchoire sur le tambour 28 et donc d'avoir toujours la garantie d'un effet de freinage réglable.

Les mâchoires 15 et 16 sont articulées sur les axes 33 et 34 et sont pourvues de secteurs dentés 35 et 36 qui engrènent entre eux, de manière à garantir leur fonctionnement correct même dans le cas de rupture d'un ou plusieurs ressorts, ce qui garantit l'action de freinage même en cas d'urgence.

En fig. 4 est représenté le dispositif de commande hydropneumatique dans lequel l'air comprimé, au moyen de la conduite 37, pénètre dans la chambre 38 du vérin 39 et repousse le pistopn 40 qui, à son tour, agit par le petit piston 41 sur l'huile contenue dans la chambre 42, reliée par un tuyau de refoulement 17' et le joint tournant 17'' à la conduite 17''' qui actionne le vérin 14.

Un manomère 45 permet de contrôler, par la canalisation 46, la pression de l'huile dans le circuit.

Une pompe à main 47 permet, au moyen du levier 48, de soulager le circuit par une vis d'évent 49 (fig. 1) disposée sur le vérin 14.

Un réservoir 50 (fig. 4) sert à contenir une réserve d'huile, remplissant la fonction de poumon pour l'installation.

D'après la figure 1 en particulier, on peut noter que le groupe tout entier peut facilement glisser sur l'arbre 2, sur lequel il est calé au moyen de la clavette 51, après dévissage de la vis 52 et démontage de la bride de fixation 53.

Le groupe tout entier peut être facilement démonté pour pouvoir effectuer d'éventuelles opérations d'entretien, réduites au seul remplacement des bandes ou garnitures de matériau anti-friction.

On notera d'autre part que l'ensemble du groupe est équipé de simples coussinets radiaux, puisqu'il n'y a pas de poussée axiale, ce qui diminue sensiblement les efforts sur le plan dynamique.

De ce fait, les avantages du groupe frein-embrayage selon l'invention sont évidents, ainsi que sur le plan de la sécurité, grâce à la commande unique pour l'actionnement des mâchoires, propre à mettre en rotation l'arbre de commande de la presse, puis à l'arrêter sans provoquer d'efforts axiaux et permettant par conséquent l'utilisation de coussinets porteurs radiaux simples.

## Revendications

1. Groupe frein-embrayage à commande unique hydro-pneumatique pour presses mécaniques, comprenant un ensemnble de freinage et un dispositif d'accouplement à friction pour être montés sur la poulie-volant d'une presse mécanique, avec une paire de mâchoires (15 et 16) synchronisées, sur les surfaces internes et externes desquelles sont appliquées des garnitures de matériau anti-friction (23, 24 - 26, 27) qui agissent respectivement, les premières contre un tambour extérieur (25), faisant fonction d'embrayage, et les secondes contre un tambour interne (28), faisant fonction de frein, ce dernier étant solidaire du corps de la presse, caracterisé par le fait que les deux mâchoires sont montées sur un disque unique (13), solidaire d'un moyeu (4) propre a être calé sur l'arbre (2) de la presse et étant commandées par un vérin unique (14) qui commande le déblocage simultané du frein et l'actionnement de l'embrayage, avec entraînement consécutif de l'arbre et réciproquement, au moyen d'une seule commande hydropneumatique, grâce à la présence de ressorts réglables (17, 18, 19, 20, 21 et 22) qui assurent une pression constante de blocage des mâchoires sur l'arbre (2), agissant en opposition audit vérin (14).

2. Groupe frein-embrayage, selon la revendication 1, caractérisé par le fait que le vérin (14), alimenté en huile sous pression, agit sur les mâchoires (15 et 16) en vue de débloquer le frein du tambour (28) solidaire de l'arbre (2) et d'assurer la friction sur le tambour (25) solidaire du volant, en agissant à l'encontre des ressorts de rappel (17, 18, 19, 20, 21 et 22), ce qui permet au volant (1) de mettre en rotation l'arbre de commande (2) de la presse.

3. Groupe frein-embrayage, selon l'une quelconque des revendications 1 et 2, caractérisé par le fait que la pression des ressorts (17, 18, 19, 20, 21, 22) est réglable moyennant rotation de disques filetés (29') à l'intérieur de la douille (30).

4. Groupe frein-embrayage, selon l'une quelconque des revendications 1 à 3, caractérisé par le fait que l'ensemble tout entier est monté sur de simples roulements à billes.

5. Groupe frein-embrayage, selon l'une quelconque des revendications 1 à 4, caractérisé par le fait que les mâchoires (15 et 16) sont reliées mécaniquement entre elles par des secteurs dentés (35 et 36) pour garantir un mouvement synchronisé.

6. Groupe frein-embrayage selon l'une quelconque des revendications 1 à 5, caractérisé par le fait qu'une série d'ailettes (10, 10') sont disposées radialement sur un moyeu tournant (4) pour produire un effet de ventilation.

## Claims

1. Clutch brake unit with a single hydro-pneumatic control for mechanical presses, comprising a brake assembly and a friction clutch device which are designed to be mounted on the flywheel-type belt pulley of a mechanical press, with a pair of synchronised shoes (15 and 16) whose inner and outer surfaces have linings (23, 24 - 26, 27) of anti-friction material which are respectively directed against an outer drum (25) acting as a clutch and against an inner drum (28) acting as a brake, the latter drum being rigidly joined to the body of the press, characterised in that the the two shoes are mounted on a single disc (13) rigidly joined to a hub (4) adapted to be fastened by wedges onto the spindle (2) of the press, and said shoes being controlled by a single jack (14) which controls the simultaneous release of the brake and the operation of the clutch, followed by actuation of the spindle, and vice versa, by means of a single hydro-pneumatic control, thanks to adjustable springs (17, 18, 19, 20, 21 and 22) which ensure that the shoes maintain a constant clamping pressure on the spindle (2), acting in opposition to said jack (14).

2. Clutch brake unit according to claim 1, characterised in that the jack (14), supplied with oil under pressure, operates on the shoes (15 and 16) so as to release the brake of the drum (28) rigidly joined to the spindle (2) and to maintain the friction on the drum (25) rigidly joined to the flywheel, by acting against the return springs (17, 18, 19, 20, 21 and 22), thereby enabling the flywheel (1) to set the operating spindle (2) of the press in rotation.

3. Clutch brake unit according to either of claims 1 and 2, characterised in that the pressure of the springs (17, 18, 19, 20, 21 and 22) can be adjusted by rotating threaded discs (29') inside the bush (30).

4. Clutch brake unit according to any of claims 1 to 3, characterised in that the entire assembly is mounted on simple ball bearings.

5. Clutch brake unit according to any of claims 1 to 4, characterised in that the shoes (15 and 16) are mechanically interconnected by toothed quadrants (35 and 36) to guarantee synchronised movement.

6. Clutch brake unit according to any of claims 1 to 5, characterised in that a series of fins (10, 10') are arranged radially around a rotating hub (4) to produce a ventilating effect.

## Patentansprüche

1. Bremse-Kupplungs-Gruppe mit hydropneumatischer Einzelsteuerung für mechanische Pressen, enthaltend eine Bremsanordnung und eine Rutschkupplung zur Montage auf einem Scheibenschwungrad einer mechanischen Presse mit einem synchronisierten Klemmbacken-Paar (15 und 16), auf deren inneren und äußeren Flächen Beläge (23, 24 - 26, 27) aus Antifriktionsmaterial angebracht sind, Wobei die ersteren durch Kupplungsfunktion auf eine äußere Trommel (25) und die letzteren durch Bremsfunktion auf eine innere Trommel (28) einwirken, und wobei die innere Trommel mit dem Pressengehäuse drehfest verbunden ist, dadurch gekennzeichnet, daß die beiden Klemmbacken auf einer mit einer Nabe (4) einstückig ausgebildeten Scheibe (13) montiert sind, die so ausgebildet ist, daß sie auf der Pressenwelle (2) verkeilt werden kann, und wobei die Klemmbacken durch einen einzelnen Stellantrieb (14) gesteuert werden, der das simultane Lösen der Bremse und die Aktivierung der Kupplung mit nachfolgender Mitnahme der Welle durch reziproke hydropneumatische Einzelsteuerung steuert, wobei dem oben genannten Stellantrieb (14) entgegenwirkende einstellbare Federn (17, 18, 19, 20, 21 und 22) einen konstanten Blockierungsdruck der Klemmbacken auf die Welle (2) garantieren.

2. Bremse-Kuplungs-Gruppe nach Anspruch 1, dadurch gekennzeichnet, daß der öldruckgesteuerte Stellantrieb (14) auf die Klemmbacken (15 und 16) derart einwirkt, daß er die Bremse, die über die die Trommel (28) mit der Welle (2) gekoppelt ist, entriegelt, sowie den Reibschluß der mit dem Schwungrad drehfest verbundenen Trommel (25) unter Gegenwirkung der Rückholfedern (17, 18, 19, 20, 21 und 22), garantiert, was dem Schwungrad (1) ermöglicht, die Antriebswelle (2) der Presse in Drehung zu versetzen.

3. Bremse-Kupplungs-Gruppe nach einem der Ansprüche 1 und 2, dadurch gekennzeichnet, daß der Druck der Federn (17, 18, 19, 20, 21 und 22) durch Verdrehen von Gewindescheiben (29') im Inneren der Hülse (30) regulierbar ist.

4. Bremse-Kupplungs-Gruppe nach einem der Ansprüche 1 bis 3, dadurch gekennzeichnet, daß die gesamte Anordnung auf einfachen Kugellagern montiert ist.

5. Bremse-Kupplungs-Gruppe nach einem der Ansprüche 1 bis 4, dadurch gekennzeichnet, daß die Klemmbacken (15 und 16) mechanisch durch Zahnsegmente (35 und 36) miteinander verbunden sind, um eine synchronisierte Bewegung zu garantieren.

6. Bremse-Kupplungs-Gruppe nach einem der Ansprüche 1 bis 5, dadurch gekennzeichnet, daß eine Anzahl von Flügeln (10, 10') radial auf einer rotierenden Nabe (4) angeordnet sind, um einen Ventilationseffekt zu erzeugen.
